# EUROPÄISCHE PATENTSCHRIFT

(11) **EP 1 209 852 B1**
(45) Veröffentlichungstag und Bekanntmachung des Hinweises auf die Patenterteilung: **18.06.2003**
(21) Anmeldenummer: 00125933.2
(22) Anmeldetag: 27.11.2000
(51) Int. Cl.: H04L 12/28, H04L 12/56

(54) **Verfahren und Vorrichtung zur Datenübertragung**
Method and device for data transmission
Procédé et dispositif pour la transmission de données

(43) Veröffentlichungstag der Anmeldung: 29.05.2002
(73) Patentinhaber: SIEMENS AKTIENGESELLSCHAFT, 80333 München (DE)
(72) Erfinder: Söllner, Siegfried, 91054 Erlangen (DE)

(56) Entgegenhaltungen:
- EP-A- 0 321 672
- EP-A- 0 773 694
- WO-A-90/06636
- DE-C- 19 928 221
- US-A- 5 555 447
- MELAMED C ET AL: "QUEUED VOICE CALL PRCESSING FOR WIDE AREA SYSTEMS" MOTOROLA TECHNICAL DEVELOPMENTS,US,MOTOROLA INC. SCHAUMBURG, ILLINOIS, Bd. 23, 1. Oktober 1994 (1994-10-01), Seite 78 XP000468386

## Beschreibung

Die Erfindung betrifft ein Verfahren zur Datenübertragung von einem Sender über einen Übertragungskanal zu mindestens einem Empfänger. Sie betrifft ferner eine Vorrichtung zur Datenübertragung von einem Sender über einen Übertragungskanal zu mindestens einem Empfänger.

Bei einer Datenübertragung kommt es häufig infolge einer zeitweise schlechten Sende- und/oder Empfangslage zu "Übertragungslücken", verursacht z.B. beim Mobilfunk durch Bewegungen des Senders und/oder des Empfängers. Desweiteren verursacht besonders beim Mobilfunk ein lokal unzureichend ausgebautes Funknetz Probleme bei der Übertragung von Daten, so dass Übertragungslücken zu Stande kommen, also zumindest Teile der zu übermittelnden Daten nicht übertragen werden bzw. nicht übertragen werden können. Falls der Übertragungskanal in Hardware realisiert ist, können Störungen an den Übertragungskabeln auftreten, wie z.B. Kabelunterbrechungen infolge von Ermüdungsbrüchen oder unbeabsichtigter Beschädigung, verursacht z.B. durch Reparaturarbeiten in der Umgebung des Übertragungskabels.

Am häufigsten kommen Störungen des Übertragungskanals beim Mobilfunk vor, was sich dadurch äußert, dass z.B. während eines Gesprächs Teile des Gesprächs nicht übertragen bzw. nicht empfangen werden können. Durch diesen Verlust an Information bei der Übertragung ist nicht mehr sichergestellt, dass den Empfänger die wesentlichen Informationsinhalte erreichen. Im schlimmsten Fall ist die Datenübermittlung völlig zwecklos, wenn wesentliche Teile der Information nicht übertragen werden konnten.

Um diese Probleme in den Griff zu bekommen, bemühen sich z.B. die Netzbetreiber von Mobilfunknetzen darum, die Flächenabdeckung des von ihnen betriebenen Mobilfunknetzes durch immer engmaschiger verteilte Sende- und Empfangszellen zu verbessern, um eine möglichst homogene Netzfeldstärke in den Zielgebieten zu erreichen. Desweiteren werden die in den mobilen Endgeräten verwendeten Codierungs- und Decodierungsalgorithmen sowie die Sende- und Empfangsmodule verbessert, um die zur Verfügung stehende Netzfeldstärke und Netzbandbreite möglichst gut auszunutzen. Jedoch bringen diese Maßnahmen keinen Erfolg, wenn sich ein Sender und/oder ein Empfänger zeitweise - wenn auch nur kurz für z.B. einige Zehntelsekunden - während der Datenübertragung in einem Gebiet ohne vorhandene Netzfeldstärke aufhält. Desweiteren ist der immer weiter vorangetriebene Ausbau eines Mobilfunknetzes sehr kostenintensiv.

Bei der Verwendung eines Hardware-Übertragungskanals, z.B. eines Bussystems, kann man das Auftreten von Störungen des Übertragungskanals z.B. dadurch verringern, indem man den Übertragungskanal, also z.B. das Buskabel, doppelt ausführt (redundanter Bus). Wenn eines dieser Buskabel ausfällt, übernimmt das noch verbleibende funktionsfähige Buskabel die Funktion des Übertragungskanals.

Eine derartige redundante Ausführung des Übertragungskanals ist jedoch wegen der erforderlichen mindestens doppelten Kapitalinvestition für den Übertragungskanal nachteilig. Weiterhin muss eine Logik zum Einsatz kommen, welche zu jedem Zeitpunkt den richtigen, also einen funktionsfähigen Übertragungskanal auswählt und an den Sender und an den Empfänger ankoppelt. Dadurch ist diese Lösung sehr aufwendig und praktisch dann nicht mehr realisierbar, wenn Sender und Empfänger sehr weit auseinander liegen.

Im Stand der Technik sind handelsübliche Mobilfunk-Telefone bekannt, welche einen Detektor zur Feststellung der Netzfeldstärke, eine Sendeeinrichtung sowie einen Speicher für zu übermittelnde Daten aufweisen.

Der Speicher kann dabei z.B. als Speicher für zu übermittelnde Kurznachrichten, sogenannte "Short Messages" (SMS) dienen: Der Benutzer gibt über die Telefontastatur einen kurzen Text ein, welcher im Speicher abgelegt wird. Durch anschließendes Anwählen z.B. eines Mobilfunk-Teilnehmers durch den Benutzer wird dieser Text dann aus dem Speicher zum angewählten Mobilfunk-Teilnehmer übermittelt.

Die Übertragung erfolgt dabei in keinem Fall unmittelbar; der zu übermittelnde Text wird immer zuerst komplett in den Speicher eingegeben und anschließend erst die Verbindung zum Empfänger aufgebaut, wenn ein Mobilfunknetz verfügbar ist und dies vom Detektor erkannt wird. Es entsteht also unvermeidlich immer eine größere zeitliche Verzögerung zwischen dem Zeitpunkt, an dem die zu ermittelnden Daten anfallen (also dem Zeitpunkt, zu dem der Text eingegeben wird) und dem Zeitpunkt, zu dem die Daten übertragen werden.

Der oben genannte Speicher kann auch als Speicher zur Aufzeichnung von Sprache ausgebildet sein. Der Benutzer kann diesen Speicher beispielsweise zum Diktieren verwenden, indem er in das Mikrofon des Mobilfunk-Telefons spricht und der Speicher die so eingegebenen Sprachinformationen abspeichert. Weiterhin kann er diesen Speicher zur Aufzeichnung eines Telefongesprächs benutzen.

Jedoch wird die gespeicherte Information dabei nicht gesendet.

In der WO 90/06636 A1 ist eine Sende-/Empfangseinrichtung offenbart, bei welcher in Folge einer Netzstörung nicht sendefähige Sprachsignale zunächst gespeichert und später gesendet werden.

Die EP 0 321 672 A2 offenbart eine Sendeeinrichtung, bei welcher Sprachsignale speicherbar sind und dann gesendet werden, wenn ein Übertragungskanal zugewiesen ist.

Aus der US 5 555 447 ist ein Kommunikationssystem bekannt, bei welchem insbesondere während des Aufbaus des Sendekanals Sprachsignale zunächst komprimiert gespeichert und dann gesendet werden, wenn der Sendekanal etabliert ist. Sobald der Sprachspeicher praktisch leer ist, wird sofort gesendet.

Der Erfindung liegt die Aufgabe zugrunde, ein Verfahren zur Datenübertragung von einem Sender über einen Übertragungskanal zu mindestens einem Empfänger anzugeben, welches vorgenannte Nachteile überwindet und mit möglichst wenig Aufwand auskommt.

Erfindungsgemäß wird die Aufgabe durch ein Verfahren zur Datenübertragung von einem Sender über einen Übertragungskanal, insbesondere einen leitungsfreien Übertragungskanal, zu mindestens einem Empfänger gelöst, bei welchem, falls der Übertragungskanal einsatzbereit und frei ist, zu übermittelnde Daten praktisch unverzögert übertragen werden und, falls der Übertragungskanal gestört ist, zu übermittelnde Daten gespeichert und dann übertragen werden, sobald der Übertragungskanal wieder einsatzbereit ist; dabei werden den zu übermittelnden Daten Zeitmarkierungen zugeordnet und gespeichert, sowie der Zeitpunkt des Beginns einer Störung des Übertragungskanals markiert und gespeichert. Die gespeicherten Daten, deren Zeitmarkierung nicht älter ist als der markierte Zeitpunkt des Beginns der Störung des Übertragungskanals werden gesendet. Erfindungsgemäß liegt weiterhin eine Pause zwischen zu übermittelnden Daten, wobei gespeicherte Daten auch während der mindestens einen Pause übertragen werden. Nach dem Ende der Störung des Übertragungskanals wird erfindungsgemäß wieder auf die sofortige Übertragung übergegangen, sobald alle Daten übertragen sind, deren Zeitmarkierungen älter sind als der aktuelle Zeitpunkt der Übertragung.

Solange die bereits gespeicherten Daten gesendet werden, ist der Übertragungskanal nicht frei und neu anfallende Daten werden ebenfalls gespeichert; sobald aber alle gespeicherten Daten abgearbeitet (gesendet) sind, werden die neu anfallenden Daten wieder praktisch unverzögert gesendet.

Eine Übertragungslücke, also der Verlust von Informationen bei der Übertragung infolge einer Störung des Übertragungskanals, wird dadurch vermieden, dass zu übermittelnde Daten gespeichert werden. Im Normalfall, wenn also der Übertragungskanal funktionsfähig ist, werden die zu übermittelnden Daten sofort, also unmittelbar, übertragen, ohne dazu auf gespeicherte Daten zurückzugreifen. Solche sofort übertragenen Daten brauchen also gar nicht gespeichert zu werden; es ist aber auch möglich, alle zu übermittelnden Daten wenigstens vorübergehend zu speichern. Ist der Übertragungskanal frei, so laufen dann Speicherung und Übertragung parallel oder die Übertragung greift nach einer sehr kurzen Zwischenspeicherzeit auf die gespeicherten Daten zurück, so dass nur eine vernachlässigbare Verzögerung in der Datenübertragung entsteht (in der Regel ist es selbst bei Telefongesprächen vernachlässigbar, wenn generierte Daten erst nach einer kurzen Verzögerung bis etwa einer Sekunde gesendet werden). Wenn der Übertragungskanal aber gestört ist, bilden die gespeicherten Daten einen Datenpuffer, so dass die Daten nicht verloren sind, wenn während des Sendens der Übertragungskanal ausfällt.

Falls der Übertragungskanal gestört ist, kann die Datenübertragung ohne Datenverlust mit den gespeicherten Daten fortgesetzt werden, sobald der Übertragungskanal wieder einsatzbereit ist.

Mittels der Zeitmarkierungen sind aus den gespeicherten Daten gezielt Datenteile entnehmbar, um diese z.B. zu senden.

Aus dem Zeitpunkt des Beginns der Störung lässt sich z.B. feststellen, bis zu welchem Zeitpunkt die zu übermittelnden Daten ohne Datenverlust übertragen wurden.

Bereits fehlerfrei übertragene Daten werden nach der Behebung der Störung nicht noch einmal übertragen. Es wird also eine unnötige redundante Übertragung von Datenteilen vermieden, indem die Übermittlung der Daten nach dem Beheben der Störung mit demjenigen Teil der gespeicherten Daten fortgesetzt wird, welcher beim Beginn der Störung des Übertragungskanals gerade nicht mehr übertragen werden konnte.

Eine Pause der zu übermittelnden Daten kann dazu benutzt werden, gespeicherte Daten zu senden, welche aufgrund einer Störung des Übertragungskanals nicht sofort gesendet werden können. Falls die Pause lange genug ist, um die vor der Pause anfallenden, aber wegen der Störung des Übertragungskanals nicht gesendeten Daten vollständig innerhalb der Pause "nachzuholen", so können die nach der Pause anfallenden, zu übermittelnden Daten nach der Pause wieder sofort gesendet werden. Dadurch bleibt die Übertragung der Daten "echtzeitnah", was sich vor allem beim Mobilfunk als vorteilhaft erweist, da der natürliche Gesprächsverlauf auf diese Weise zumindest annähernd erhalten bleibt.

Da eine Pause in den zu übermittelnden Daten keinen Informationsgehalt aufweist, kann diese dazu benutzt werden, die Übermittlung von Daten nachzuholen, welche aufgrund einer Störung des Übertragungskanals nicht gesendet werden konnten. Falls das Nachholen, also die Fortsetzung der Datenübertragung mit gespeicherten Daten, die Pause nur teilweise ausfüllt, können die zu übermittelnden Daten im Anschluss an diese Pause wieder sofort übertragen werden und die Pause selbst bleibt beim Übertragen der Daten erhalten, wenn auch im Vergleich zur originären Pause zeitlich verkürzt. Das Echtzeitsendeverhalten des Senders bleibt so möglichst originalgetreu erhalten.

Die Erfindung führt weiterhin zu einer Vorrichtung zur Datenübertragung von einem Sender über einen Übertragungskanal zu mindestens einem Empfänger.

Die Vorrichtung umfasst:
1. Einen Detektor, der ertüchtigt ist, die Einsatzbereitschaft des Übertragungskanals festzustellen,
2. Mindestens einen Speicher, in welchem die zu übermittelnden Daten zumindest im Falle einer Störung des Übertragungskanals speicherbar sind, und
3. eine Sendeeinrichtung, welche ertüchtigt ist, die zu übermittelnden Daten sofort (d.h. praktisch ohne Verzögerung) zu übertragen, falls der Übertragungskanal einsatzbereit ist, und, falls der Übertragungskanal gestört ist, gespeicherte Daten dann zu übertragen, sobald der Übertragungskanal wieder einsatzbereit ist, wobei
in mindestens einem der Speicher den zu übermittelnden Daten zugeordnete Zeitmarkierungen speicherbar sind,
in mindestens einem der Speicher eine Markierung für den Zeitpunkt des Beginns einer Störung des Übertragungskanals speicherbar ist,
die Sendeeinrichtung ertüchtigt ist, gespeicherte Daten zu senden, deren Zeitmarkierung nicht älter ist als der markierte Zeitpunkt des Beginns der Störung des Übertragungskanals, und
die Sendeeinrichtung weiterhin ertüchtigt, nach dem Ende der Störung wieder auf die sofortige Übertragung überzugehen, sobald alle Daten übertragen sind, deren Zeitmarkierungen älter sind als der aktuelle Zeitpunkt der Übertragung.

Die nachfolgenden Zeichnungen veranschaulichen zwei Ausführungsbeispiele der Erfindung. Es zeigen:
- FIG 1: eine schematische Darstellung einer ersten Vorrichtung zur Datenübertragung nach der Erfindung,
- FIG 2: einen Sender und einen Empfänger, welche durch einen Übertragungskanal verbunden sind, bei einer zweiten Vorrichtung nach der Erfindung, und
- FIG 3: einen beispielhaften zeitlichen Verlauf zu übermittelnder Daten, Verfügbarkeit des Übertragungskanals und an einen Empfänger übermittelter Daten.

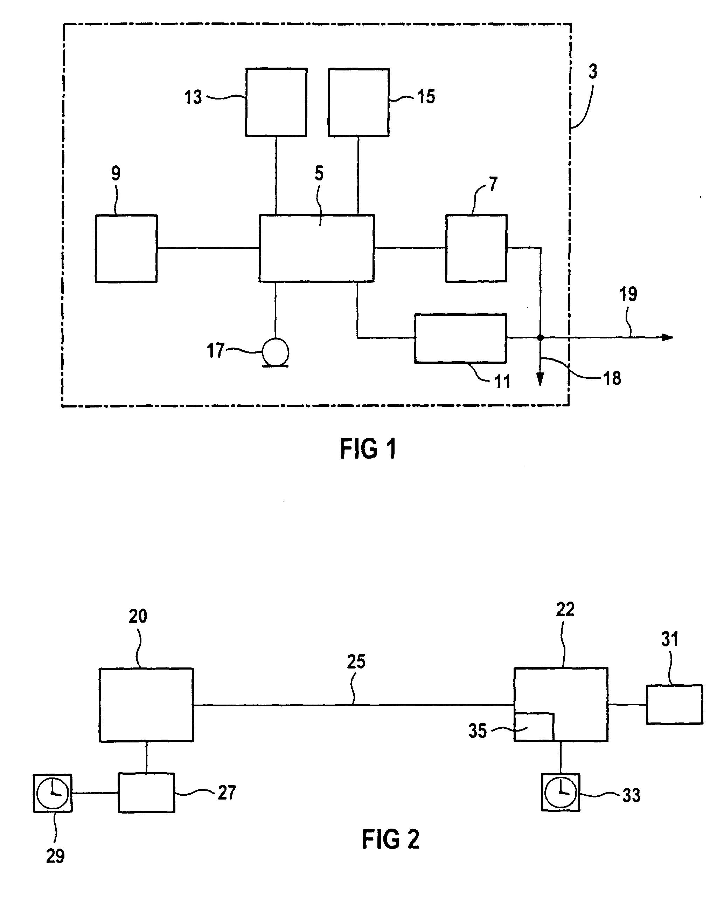

In FIG 1 ist eine Vorrichtung 3 zur Datenübertragung dargestellt. Es kann sich dabei z.B. um eine Mobilfunkeinrichtung zur Sprachübertragung handeln. Die zu übermittelnde Sprachinformation wird in ein Mikrofon 17 gesprochen. Ein Detektor 7 stellt fest, ob der Übertragungskanal 19, beispielsweise ein Mobilfunknetz, einsatzbereit ist, z.B. beim Mobilfunk durch Messung der Feldstärke des Übertragungsnetzes. Wenn dies der Fall ist, gibt der Detektor 7 eine Sendeeinrichtung 11 über ein Steuermodul frei und die zu übermittelnden Daten werden von der Sendeeinrichtung 11 sofort über den Übertragungskanal 19 zu mindestens einem Empfänger übertragen.

Im ersten Speicher 13 oder im zweiten Speicher 15 werden zu übermittelnde Daten aufgezeichnet. Dies kann sofort bei Beginn eines zu übermittelnden Gesprächs geschehen (die Daten werden also dann gleichzeitig und parallel gesendet und gespeichert) oder auch erst ab dem Zeitpunkt einer Störung des Übertragungskanals 19 (die Daten werden dann vom Steuermodul 5 bei Beginn der Störung von dem Eingang der Sendeeinrichtung auf den Speicher umgeleitet).

Falls der Detektor 7 eine Störung des Übertragungskanals 19 detektiert, so meldet er dies also an das Steuermodul 5. Ein Zeitgeber 9 überträgt kontinuierlich Zeitmarkierungen an das Steuermodul 5, so dass ein vom Detektor 7 detektierter Beginn einer Störung des Übertragungskanals 19 einem diskreten Störungsanfangszeitpunkt zugeordnet wird. Dieser Anfangszeitpunkt wird ebenfalls in einem der Speicher 13 oder 15 abgespeichert. Während einer Störung des Übertragungskanals 19 läuft die Speicherung der Gesprächsdaten. Wenn nun der Detektor 7 nach einer Störung wieder die Einsatzbereitschaft des Übertragungskanals 19 detektiert, so werden die gespeicherten Daten, welche sich entweder im ersten Speicher 13 oder im zweiten Speicher 15 befinden, durch die Sendeeinrichtung 11 an den Empfänger übermittelt. Dadurch, dass der Anfangszeitpunkt einer Störung des Übertragungskanals ebenfalls abgespeichert ist, kann die Übermittlung von gespeicherten Daten aus dem ersten Speicher 13 oder dem zweiten Speicher 15 gezielt ab dem gespeicherten Störungsanfangszeitpunkt stattfinden. Dadurch ist trotz einer zeitweisen Störung des Übertragungskanals 19 sichergestellt, dass alle Daten, die im Mikrofon während der Störung anfallen, nicht verloren gehen, sondern für eine spätere Übertragung zur Verfügung stehen und dann dem Empfänger noch erreichen können. Der Empfänger muss lediglich während der Störung des Übertragungskanals eine "Zwangspause" in Kauf nehmen. Dadurch, dass bei der Vorrichtung 3 nach FIG 1 zwei Speicher 13 und 15 vorgesehen sind, kann jeweils einer der Speicher bei Beginn einer Störung die Aufzeichnung des zu übertragenden Gesprächs vornehmen, während der andere Speicher zur Verfügung steht, um die nach der Störung anfallenden Daten zu speichern. Sobald dann die Daten des einen Speichers ausgelesen und gesendet sind, wird mit der Übertragung der Daten aus dem anderen Speicher begonnen, und der erste Speicher steht wieder zum Abspeichern im Falle einer Störung bereit. Das Steuermodul 5 koordiniert dabei, für welche Aufgabe jeder der beiden Speicher 13 und 15 gerade vorgesehen ist.

Bei der Übermittlung des Gesprächs kommen natürlicherweise Gesprächspausen zustande, so dass - falls die aufgetretenen Störungen des Übertragungskanals nicht sehr lange waren - diese Gesprächspausen teilweise oder ganz mit der Fortsetzung der Übermittlung von gespeicherten Daten aufgefüllt werden können. So geht für den Empfänger keine Gesprächsinformation verloren und im günstigen Fall, dass die Fortsetzung der Datenübermittlung mit gespeicherten Daten vollständig in einer Gesprächspause abgeschlossen werden kann, ist die Komfort-Einbuße durch die nicht-synchrone Übertragung von Teilen der Daten nicht sehr groß, da die originären Gesprächspausen lediglich verkürzt beim Empfänger wahrgenommen werden. Der natürliche Verlauf eines Gespräches bleibt im Wesentlichen bestehen, wenn nach der Fortsetzung der Datenübermittlung mit gespeicherten Daten im Anschluss an eine originäre Gesprächspause wieder sofort gesendet wird.

Ein wichtiger Vorteil der Vorrichtung 3 besteht darin, dass Redundanzen, also überflüssige Übermittlung von bereits übermittelten Teilen der Information, vermieden werden, weil nach einer Störung nur diejenigen Gesprächsteile aus dem Speicher gesendet werden, welche nicht schon übermittelt wurden. Die gezielte Übermittlung dieses Teils der gespeicherten Daten ist möglich, da der Zeitpunkt des Beginns einer Störung abgespeichert wird.

In FIG 1 ist ferner der Anschluss 18 einer Empfangseinrichtung am Übertragungskanal 19 angedeutet für den Fall, dass eine bidirektionale Kommunikation zwischen zwei Stationen vorgesehen ist. Dabei können beide Stationen den gleichen Aufbau gemäß FIG 1 besitzen.

In FIG 2 ist ein Sender 20 über einen Übertragungskanal 25 mit einem Empfänger 22 verbunden. Der Sender ist mit einem kontinuierlichen Umlaufspeicher 27 verbunden, aus welchem jederzeit die gespeicherten Daten, beispielsweise die Daten der unmittelbar zurückliegenden fünf Minuten, auslesbar sind. Diese gespeicherten Daten sind zusammen mit von einem Zeitgeber 29 gelieferten kontinuierlichen Zeitmarkierungen abgespeichert.

Der Empfänger 22 ist mit einem Detektor 31 verbunden, welcher die Verfügbarkeit des Übertragungskanals 25 auf der Empfängerseite detektiert. Wenn nun der Detektor 31 eine Störung des Übertragungskanals 25 feststellt, so erzeugt ein Störmeldebaustein 35 eine Störmeldung, welche den Zeitpunkt des Beginns der Störung enthält; der Zeitpunkt des Beginns der Störung wird von einem Zeitgeber 33 ermittelt. Die vom Störmeldebaustein 35 erzeugte Störmeldung wird an den Sender 20 übermittelt, sobald der Übertragungskanal 25 wieder einsatzbereit ist. Der Sender 20 kann nun die von ihm übermittelten, vom Empfänger jedoch wegen einer Störung des Übertragungskanals 25 nicht empfangenen Daten dem Empfänger 22 als gespeicherte Daten aus dem Umlaufspeicher 27 übermitteln. Da die vom Empfänger 22 an den Sender 20 übermittelte Störmeldung auch den Zeitpunkt des Beginns der Störung des Übertragungskanals 25 umfasst, kann der Sender 20 gezielt denjenigen Teil der gespeicherten Daten aus dem Umlaufspeicher 27 an den Empfänger 22 übermitteln, welche vom Empfänger 22 gerade nicht mehr empfangen wurde. Dadurch wird vermieden, dass der Sender 20 Daten an den Empfänger 22 übermittelt, die dieser bereits empfangen hat. Außerdem wird so vermieden, dass der Empfänger 22 zumindest Teile der Daten nicht erhält.

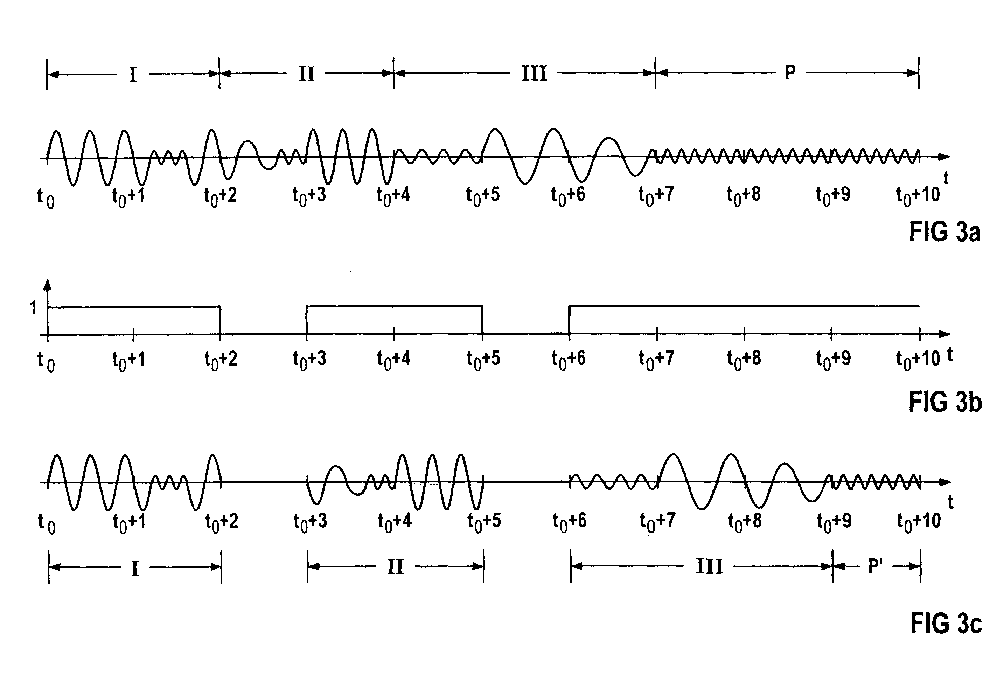

In FIG 3 ist der zeitliche Verlauf von zu übermittelnden Daten (FIG 3a) dargestellt, welche Datenabschnitte I, II, III und eine Datenpause P aufweisen. Desweiteren ist der zeitliche Verlauf der Einsatzbereitschaft (FIG 3b) eines Übertragungskanals dargestellt, welcher im vorliegenden Ausführungsbeispiel zwei Störungen des Übertragungskanals aufweist, nämlich in den Zeitintervallen [t₀ + 2; t₀ + 3] und [t₀ + 5; t₀ + 6].

Außerdem sind in FIG 3c die von einem Empfänger empfangenen Daten als zeitlicher Verlauf dargestellt.

Man erkennt, dass der Datenabschnitt I der zu übermittelnden Daten sofort übertragen wird, da dies aufgrund der im entsprechenden Zeitintervall [t_{0;} t₀ + 2] detektierten Einsatzbereitschaft des Übertragungskanals möglich ist. Die ab dem Zeitpunkt t₀ + 2 anfallenden Daten können wegen der Störung nicht sofort, sondern erst ab dem Zeitpunkt t₀ + 3 übertragen werden. Auch diese Übertragung ist ab dem Zeitpunkt t₀ + 5 wieder gestört, so dass im Zeitintervall [t₀ + 3; t₀ + 5] nur den Datenabschnitt II übertragen werden kann. Daher wird auch der Datenabschnitt III gespeichert und erst ab dem Zeitpunkt t₀ + 6 übertragen. Der Datenabschnitt II der zu übermittelnden Daten wird also um die Länge der ersten Störung zeitversetzt gesendet und vom Empfänger empfangen. Das selbe gilt für den Datenabschnitt III der zu übermittelnden Daten, welcher im Vergleich zum Sendezeitpunkt dieses Datenabschnitts um zwei Zeiteinheiten verzögert empfangen wird.

Erst zum Zeitpunkt t₀ + 9 sind - unter Ausnutzung der Pause P, da in solchen Pausen natürlich keine zu übertragenden Daten anfallen und daher auch nicht gespeichert werden müssen - die gespeicherten Daten übertragen und der Übertragungskanal wäre wieder frei, um wieder auf die praktisch unverzögerte Übermittlung übergehen zu können. Im dargestellten Fall allerdings erstreckt sich die Gesprächspause P über den Zeitpunkt t₀ + 9 hinaus und es fallen bis zum Zeitpunkt t₀ + 10 überhaupt keine zu übertragenden Daten an.

Es ist deutlich erkennbar, dass der gesamte Dateninhalt, welcher sich in den zu übermittelnden Datenabschnitten I, II und III befindet, vom Empfänger empfangen wurde. Lediglich die Pause P, welche originär eine Länge von 3 Zeiteinheiten aufweist, wird vom Empfänger verkürzt als Pause P' empfangen mit einer Länge von nur noch einer Zeiteinheit. Da die Pause P jedoch keinen Informationsgehalt aufweist, ist das Empfangen einer entsprechend verkürzten Pause P' durch den Empfänger nicht mit einem Verlust an Information verbunden.

## Patentansprüche

1. Verfahren zur seriellen Datenübertragung von einem Sender (20) über einen Übertragungskanal (25), insbesondere einen leitungsfreien Übertragungskanal, zu mindestens einem Empfänger (22), wobei zu übermittelnde Daten
- falls der Übertragungskanal (25) einsatzbereit und frei ist, praktisch unverzögert übertragen, und
- falls der Übertragungskanal (25) gestört oder nicht frei ist, gespeichert und dann übertragen werden, sobald der Übertragungskanal (25) wieder einsatzbereit ist,
**dadurch gekennzeichnet, dass**
- den zu übermittelnden Daten Zeitmarkierungen zugeordnet und gespeichert werden,
- der Zeitpunkt des Beginns einer Störung des Übertragungskanals markiert und gespeichert wird,
- die gespeicherten Daten, deren Zeitmarkierung nicht älter ist als der markierte Zeitpunkt des Beginns der Störung des Übertragungskanals (25), gesendet werden,
- mindestens eine Pause (P) zwischen zu übermittelnden Daten liegt,
- gespeicherte Daten auch während der mindestens einen Pause (P) übertragen werden, und
- auf die sofortige Übertragung übergegangen wird, sobald alle Daten übertragen sind, deren Zeitmarkierungen älter sind als der aktuelle Zeitpunkt der Übertragung.

2. Verfahren nach einem der Ansprüche 1,
**dadurch gekennzeichnet, dass**
die zu übermittelnden Daten zur Übermittlung von Sprache dienen.

3. Vorrichtung zur Datenübertragung (3) von einem Sender über einen Übertragungskanal (19) zu mindestens einem Empfänger, mit einem Detektor (7) für die Einsatzbereitschaft des Übertragungskanals (19), mindestens einem Speicher (13, 15) für zu übermittelnde Daten und einer Sendeeinrichtung (11), wobei der mindestens eine Speicher (13, 15) ertüchtigt ist, die zu übermittelnden Daten zumindest dann zu speichern, wenn der Detektor (7) eine Störung des Übertragungskanals (19) feststellt,
und
die Sendeeinrichtung (11) ertüchtigt ist, die zu übermittelnden Daten praktisch unverzögert zu übertragen, falls der Übertragungskanals (19) einsatzbereit ist, und , falls der Übertragungskanal (19) gestört ist, gespeicherte Daten dann zu übertragen, sobald der Übertragungskanal (19) wieder einsatzbereit ist,
**dadurch gekennzeichnet, dass**
- in mindestens einem der Speicher (13, 15) den zu übermittelnden Daten zugeordnete Zeitmarkierungen speicherbar sind,
- in mindestens einem der Speicher (13, 15) eine Markierung für den Zeitpunkt des Beginns einer Störung des Übertragungskanals (19) speicherbar ist,
- die Sendeeinrichtung (11) ertüchtigt ist, gespeicherte Daten zu senden, deren Zeitmarkierung nicht älter ist als der markierte Zeitpunkt des Beginns der Störung des Übertragungskanals (19), und
- die Sendeeinrichtung (11) ertüchtigt ist, nach dem Ende der Störung wieder auf die praktisch unverzögerte Übertragung überzugehen, sobald alle Daten übertragen sind, deren Zeitmarkierungen älter sind als der aktuelle Zeitpunkt der Übertragung.

## Claims

1. Method for serial data transmission from a sender (20), via a transmission channel (25), particularly a line-free transmission channel, to at least one receiver (22), data to be communicated
- being communicated virtually without delay if the transmission channel (25) is ready for operation and free, and
- if the transmission channel (25) is disturbed, being stored and then transmitted as soon as the transmission channel (25) is again ready for operation,
**characterized in that**
- time markings are assigned to data to be communicated, and are stored in memory,
- the instant of the commencement of a disturbance in the transmission channel is marked and stored in memory,
- the stored data whose time marking is not older than the marked instant of the commencement of the disturbance in the transmission channel (25) is transmitted,
- there is at least one pause (P) between data to be transmitted,
- stored data is also transmitted during the at least one pause (P), and
- transition is effected to immediate transmission as soon as all data whose time markings are older than the current instant of transmission has been transmitted.

2. Method according to one of Claims 1,
**characterized in that** the data to be communicated are used for the communication of speech.

3. Device for data transmission (3) from a sender, via a transmission channel (19), to at least one receiver, with a detector (7) for the operational readiness of the transmission channel (19), at least one memory (13, 15) for data to be communicated, and with a transmitting device (11), the at least one memory (13, 15) being capable of storing the data to be communicated at least when the detector (7) ascertains a disturbance in the transmission channel (19), and
the transmitting device (11) being capable of transmitting the data to be communicated virtually without delay if the transmission channel (19) is ready for operation and, if the transmission channel (19) is disturbed, of then transmitting stored data as soon as the transmission channel (19) is again ready for operation, **characterized in that**
- time markings, assigned to data to be communicated, can be stored in at least one of the memories (13, 15),
- a marking for the instant of the commencement of a disturbance in the transmission channel (19) can be stored in at least one of the memories (13, 15),
- the transmitting device (11) is capable of transmitting stored data whose time marking is not older than the marked instant of the commencement of the disturbance in the transmission channel (19), and
- the transmitting device (11) is capable of transferring back to virtually undelayed transmission at the end of the disturbance, as soon as all data whose time markings are older than the current instant of transmission has been transmitted.

## Revendications

1. Procédé pour la transmission de données en série par l'intermédiaire d'un canal de transmission (25), notamment d'un canal de transmission sans fil, d'un émetteur (20) à au moins un récepteur (22), dans lequel
- si le canal de transmission (25) est disponible et libre, on transmet pratiquement sans retard les données à transmettre, et
- si le canal de transmission (25) est perturbé ou n'est pas libre, on mémorise les données à transmettre et on les transmet dès que le canal de transmission (25) est à nouveau disponible,
**caractérisé par le fait que**
- on associe des repères temporels aux données à transmettre et on les mémorise,
- on repère l'instant du début d'une perturbation du canal de transmission et on le mémorise,
- on émet les données mémorisées dont le repère temporel n'est pas plus ancien que l'instant repéré du début de la perturbation du canal de transmission (25),
- il existe au moins une pause (P) entre les données à transmettre,
- pendant la ou les pauses (P), on transmet aussi des données mémorisées, et
- on passe à la transmission immédiate dès que sont transmises toutes les données dont les repères temporels sont plus anciens que l'instant actuel de la transmission.

2. Procédé selon la revendication 1, **caractérisé par le fait que** les données à transmettre servent à la transmission de paroles.

3. Dispositif (3) qui est destiné à la transmission de données d'un émetteur à au moins un récepteur par l'intermédiaire d'un canal de transmission (19) et qui comporte un détecteur (7) pour la disponibilité du canal de transmission (19), au moins une mémoire (13, 15) pour des données à transmettre et un dispositif émetteur (11), la ou les mémoires (13, 15) étant capables de mémoriser les données à transmettre au moins lorsque le détecteur (7) détecte une perturbation du canal de transmission (19), et
le dispositif émetteur (11) étant capable, si le canal de transmission (19) est disponible, de transmettre pratiquement sans retard les données à transmettre et, si le canal de transmission (19) est perturbé, de transmettre des données mémorisées dès que le canal de transmission (19) est à nouveau disponible,
**caractérisé par le fait que**
- des repères temporels associés aux données à transmettre sont mémorisables dans au moins l'une des mémoires (13, 15),
- un repère pour l'instant du début d'une perturbation du canal de transmission (19) est mémorisable dans au moins l'une des mémoires (13, 15),
- le dispositif émetteur (11) est capable d'émettre des données mémorisées dont le repère temporel n'est pas plus ancien que l'instant repéré du début de la perturbation du canal de transmission (19), et
- le dispositif émetteur (11) est capable, après la fin de la perturbation, de repasser à la transmission pratiquement non retardée dès que sont transmises toutes les données dont les repères temporels sont plus anciens que l'instant actuel de la transmission.
